# EUROPEAN PATENT SPECIFICATION

(11) **EP 3 444 464 B1**
(45) Date of publication and mention of the grant of the patent: **29.12.2021**
(21) Application number: 18184781.5
(22) Date of filing: 20.07.2018
(51) Int. Cl.: F02C 7/26, F02C 7/277

(54) **SYSTEM AND METHOD FOR ROTATING A GAS TURBINE ENGINE DURING A MOTORING CYCLE**
SYSTEM UND VERFAHREN ZUM DREHEN EINES GASTURBINENMOTORS WÄHREND EINES MOTORZYKLUS
SYSTÈME ET PROCÉDÉ POUR TOURNER UN MOTEUR À TURBINE À GAZ PENDANT UN CYCLE DE MOTORISATION

(30) Priority: 07.08.2017 US 201715670899
(43) Date of publication of application: 20.02.2019
(73) Proprietor: Raytheon Technologies Corporation, Farmington, CT 06032 (US)
(72) Inventor: GELWAN, David, West Hartford, CT 06119 (US); BOSTWICK, David M., East Hartford, CT 06108 (US); CLAUSON, Jesse W., Agawam, MA 01001 (US)
(74) Representative: Dehns

(56) References cited:
- EP-A2- 2 514 949
- WO-A2-2018/017173
- US-A1- 2010 085 676
- US-A1- 2015 167 553

## Description

### FIELD

The present disclosure relates to gas turbine engines, and more specifically, to systems and methods for rotating a gas turbine engine during a motoring cycle.

### BACKGROUND

Gas turbine engines typically include a fan section to drive inflowing air, a compressor section to pressurize inflowing air, a combustor section to burn a fuel in the presence of the pressurized air, and a turbine section to extract energy from the resulting combustion gases. The fan section may include a plurality of fan blades coupled to a fan hub. The compressor section and the turbine section typically include a series of alternating rotors and stators.

Gas turbine engines typically may undergo a thermal stabilization or cooling cycle prior to engine operation (e.g., a motoring cycle). Gas turbine engines, including turbofan engines, may utilize an air turbine starter, configured to receive air from a starter air valve, for a cooling cycle and subsequent spool up to ignition. Typical systems modulate the position of the starter air valve to control airflow to the air turbine starter causing undesirable wear in the starter air valve and poor system reliability and durability.

WO 2018/017173 A2 discloses a system and method for actuating a starter motor for a gas turbine engine and controlling the motoring speed of the turbine engine.

### SUMMARY

According to a first aspect of the invention, there is provided a system for use in a gas turbine engine according to claim 1.

In various embodiments, the operations may further comprise the step of controlling, by the controller, a speed of rotation in the gas turbine engine by modulating the output pressure of the airflow to the engine starter. The APU command may be configured to modulate the APU into a main engine start (MES) mode, a low pressure mode, or a high pressure mode. In response to receiving the starter air valve command the starter air valve may be configured to actuate into an open position or an intermediary position. In response to transmitting the starter air valve command and the APU command, the APU and the starter air valve may be configured to one of: modulate the APU to a MES mode and modulate the starter air valve to an intermediary position; and modulate the APU to a low pressure mode and modulate the starter air valve to an open position.

According to a second aspect of the invention, there is provided a method according to claim 5.

In various embodiments, the method may also comprise modulating, by the engine starter, a rotation speed of the gas turbine engine in response to receiving the compressed airflow from the starter air valve. The method may comprise receiving, by the controller, a motoring command, wherein the motoring command is configured to initiate an airflow from the APU to the starter air valve. The engine sensor feedback may comprise at least one of a speed signal, a position feedback, a temperature feedback, or a pressure feedback. The APU command may be configured to modulate the APU into a main engine start (MES) mode, a low pressure mode, or a high pressure mode. In response to receiving the starter air valve command the starter air valve may be configured to actuate into an open position or an intermediary position.

According to a third aspect of the invention, there is provided a controller for a gas turbine engine according to claim 10.

In various embodiments, the controller may further comprise the operation of modulating, by the engine starter, a rotation speed of the gas turbine engine in response to receiving the compressed airflow from the starter air valve. The controller may further comprise the operation of receiving, by the controller, a motoring command, wherein the motoring command is configured to initiate an airflow from the APU to the starter air valve. The engine sensor feedback may comprise at least one of a speed signal, a position feedback, a temperature feedback, or a pressure feedback. The APU command may be configured to modulate the APU into a main engine start (MES) mode, a low pressure mode, or a high pressure mode. In response to receiving the starter air valve command, the starter air valve may be configured to actuate into an open position or an intermediary position.

The forgoing features and elements as well as the operation of the disclosed embodiments will become more apparent in light of the following description and accompanying drawings.

### BRIEF DESCRIPTION OF THE DRAWINGS

The subject matter of the present invention is particularly pointed out and distinctly claimed in the appended claims. A more complete understanding of the present disclosure, however, may best be obtained by referring to the detailed description and claims when considered in connection with the following illustrative figures. In the following figures, like reference numbers refer to similar elements and steps throughout the figures.
FIG. 1 illustrates a block diagram for a system for rotating a gas turbine engine during a motoring cycle, in accordance with various embodiments;
FIG. 2 illustrates a cross-section view of an exemplary gas turbine engine, in accordance with various embodiments;
FIG. 3 illustrates a cross-section view of an exemplary auxiliary power unit (APU), in accordance with various embodiments; and
FIG. 4 illustrates a process flow for a method of rotating a gas turbine engine during a motoring cycle, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical changes and adaptations in design and construction may be made in accordance with this disclosure and the teachings herein. Thus, the detailed description herein is presented for purposes of illustration only and not of limitation.

The scope of the disclosure is defined by the appended claims rather than by merely the examples described.

Furthermore, any reference to singular includes plural embodiments, and any reference to more than one component or step may include a singular embodiment or step. Also, any reference to attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

As used herein, "electronic communication" means communication of electronic signals with physical coupling (e.g., "electrical communication" or "electrically coupled") or without physical coupling and via an electromagnetic field (e.g., "inductive communication" or "inductively coupled" or "inductive coupling"). As used herein, "transmit" may include sending electronic data from one system component to another via electronic communication between the components. Additionally, as used herein, "electronic data" may include encompassing information such as commands, queries, files, data for storage, and the like in digital or any other form.

As used herein, "aft" refers to the direction associated with a tail (e.g., the back end) of an aircraft, or generally, to the direction of exhaust of a gas turbine engine. As used herein, "forward" refers to the direction associated with a nose (e.g., the front end) of the aircraft, or generally, to the direction of flight or motion.

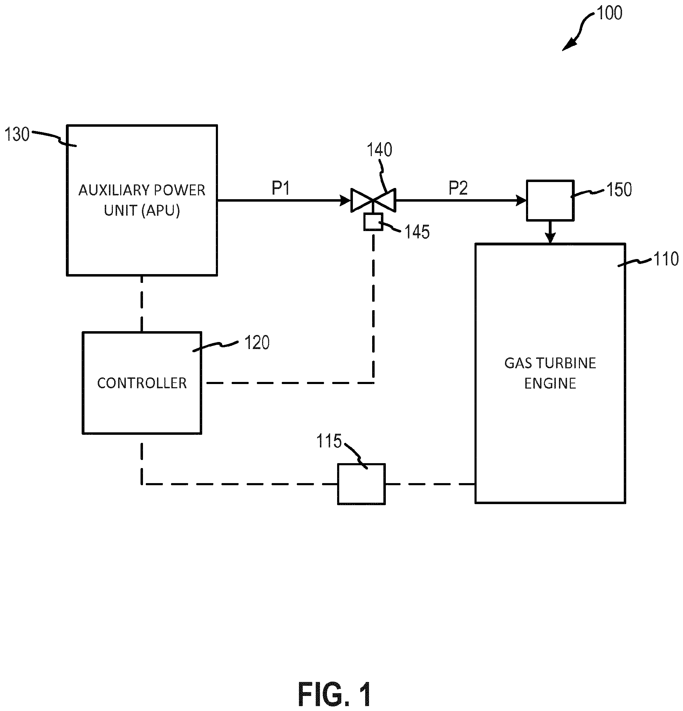

In various embodiments, and with reference to FIG. 1, a system 100 for rotating a gas turbine engine during a motoring cycle is disclosed. Various components of a gas turbine engine, including the rotor systems, may heat or cool at different rates following operation and shutdown, leading to unequal thermal expansion which may physically deform the engine components. Such thermal inequality may lead to bowed rotors which can cause deflection of the rotor systems. Starting the gas turbine engine in this bowed condition can lead to tip strike of the rotor blades against nearby engine components, such as blade outer air seals (BOAS). System 100, as provided herein, may aid in the uniform cooling of gas turbine engine components during start-up and may reduce engine maintenance times. System 100 may be configured to regulate airflow to the engine starter. By controlling airflow to the engine starter, the speed of the gas turbine engine can be regulated to uniformly distribute engine temperature, thereby reducing the bowing of rotor systems, particularly during engine start-up. In that respect, and as discussed further herein, system 100 may allow for the modulation of airflow from multiple sources (e.g., APU 130 and starter air valve 140) to increase system 100 durability and reliability, and decrease undesirable wear in system 100 components. Moreover, the modulation of airflow from multiple sources may create a robust system for controlling airflow to the gas turbine engine's air turbine for reliable and precise starting conditions. In various embodiments, system 100 may comprise a gas turbine engine 110, a controller 120, an auxiliary power unit (APU) 130, a starter air valve 140, and an engine starter 150.

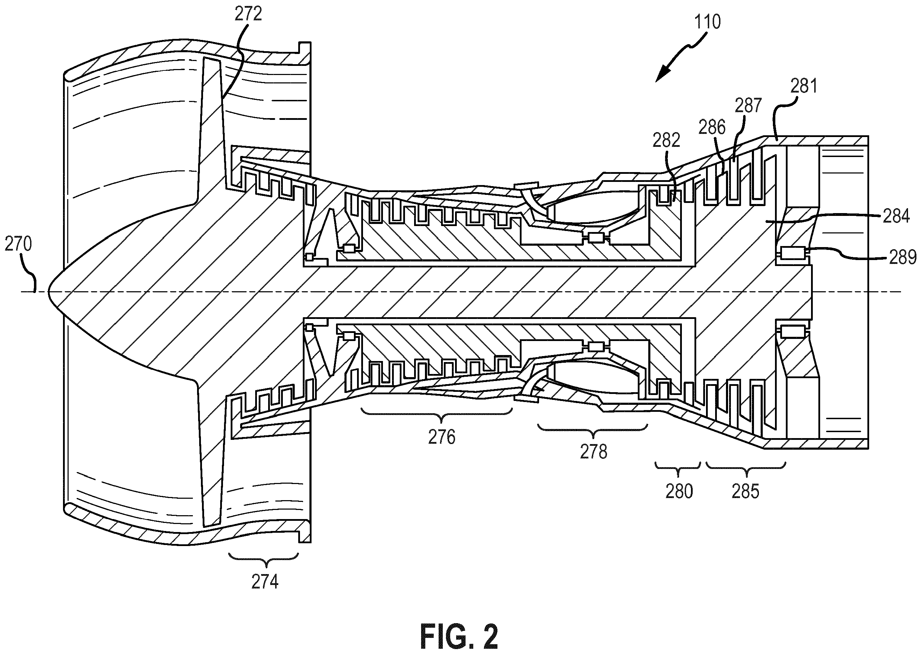

In various embodiments, and with reference to FIG. 2, an exemplary gas turbine engine 110 is illustrated. Gas turbine engine 110 is disposed about axial centerline axis 270, which may also be referred to as axis of rotation 270. Gas turbine engine 110 may comprise a fan 272, compressor sections 274 and 276, a combustion section 278, and turbine sections 280, 285. The fan 272 may drive air into compressor sections 274, 276, which may further drive air along a core flow path for compression and communication into the combustion section 278. Air compressed in the compressor sections 274, 276 may be mixed with fuel and burned in combustion section 278 and expanded across the turbine sections 280, 285. The turbine sections 280, 285 may include high pressure rotors 282 and low pressure rotors 284, which rotate in response to the expansion. The turbine sections 280, 285 may comprise alternating rows of rotary airfoils or rotor blades 286 and stator vane assemblies 287, housed within an engine casing 281. Cooling air may be supplied to the turbine sections 280, 285 from the compressor sections 274, 276. A plurality of bearings 289 may support spools in the gas turbine engine 110. FIG. 2 provides a general understanding of the sections in a gas turbine engine, and is not intended to limit the disclosure.

The present disclosure may extend to all types of applications and to all types of turbine engines, including, for example, turbojets, turboshafts, and three spool (plus fan) turbofans wherein an intermediate spool includes an intermediate pressure compressor ("IPC") between a low pressure compressor ("LPC") and a high pressure compressor ("HPC"), and an intermediate pressure turbine ("IPT") between the high pressure turbine ("HPT") and the low pressure turbine ("LPT").

In various embodiments, and with reference again to FIG. 1, system 100 may further comprise one or more feedback elements to monitor and measure various gas turbine engine 110 characteristics. For example, a sensor 115 may be coupled to or in electronic communication with gas turbine engine 110. Sensor 115 may comprise a speed sensor, position sensor, temperature sensor, pressure sensor or other sensing device. Sensor 115 may be configured to measure a characteristic of an engine component or gas turbine engine 110. Sensor 115 may be configured to measure, for example, a rotational speed or angular velocity of gas turbine engine 110. Sensor 115 may be configured to transmit the rotational speed measurement to controller 120, thereby providing engine sensor feedback about gas turbine engine 110 to controller 120. The engine sensor feedback may be, for example, a speed signal, or may be position feedback, temperature feedback, pressure feedback or other data.

In various embodiments, controller 120 may be in electronic communication with sensor 115, APU 130, and starter air valve 140, via a valve control device 145. In various embodiments, controller 120 may also be in electronic communication with gas turbine engine 110. For example, controller 120 may be integrated into computer systems onboard an aircraft, such as, for example, a full authority digital engine control (FADEC). Controller 120 may also be a standalone computer system separate from and off-board the aircraft, such as, for example, in a diagnostic and/or maintenance computer system. Controller 120 may include one or more processors and/or one or more tangible, non-transitory memories and be capable of implementing logic. Each processor can be a general purpose processor, a digital signal processor (DSP), an application specific integrated circuit (ASIC), a field programmable gate array (FPGA) or other programmable logic device, discrete gate or transistor logic, discrete hardware components, or any combination thereof. In various embodiments, controller 120 may comprise a processor configured to implement various logical operations in response to execution of instructions, for example, instructions stored on a non-transitory, tangible, computer-readable medium.

In various embodiments, APU 130 may be in electronic communication with controller 120, and may be configured to receive electronic data from controller 120. APU 130 may also be in fluid communication with starter air valve 140, and may be configured to deliver compressed air at a supply pressure P1 to starter air valve 140.

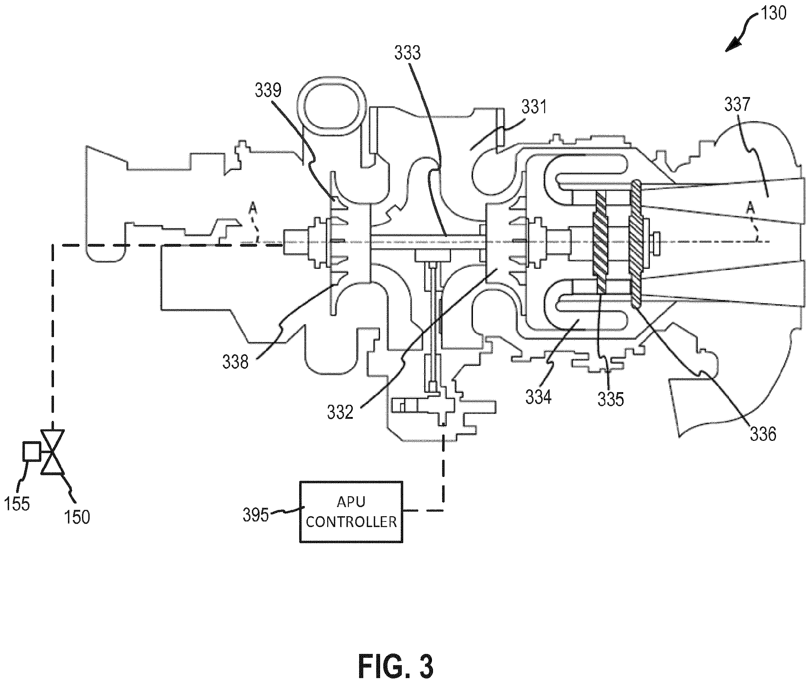

In various embodiments, and with reference to FIG. 3, an exemplary APU 130 is shown. APU 130 may include a centrifugal compressor 332 for pressurizing incoming air from inlet 331. A combustor 334 may be disposed aft of centrifugal compressor 332 (also referred to herein as an impeller). The compressed air may be mixed with fuel and ignited in the combustor 334, generating an annular stream of hot combustion gases moving towards exhaust duct 337. A turbine 335 and turbine 336 may be aft of the combustor 334 and is also mechanically coupled to centrifugal compressor 332 through a shaft 333. Shaft 333 may be configured to rotate to drive centrifugal compressor 332 and load compressor 338. Turbine 335 and turbine 336 may extract energy from the combusted gases exiting the combustor 334. In various embodiments, one or more of the previous components may not be present.

Various components of APU 130 may rotate about an axis of rotation A. The centrifugal compressor 332 may direct compressed air towards the combustor 334. The forward and aft positions of APU 130 may be described relatively along axis of rotation A. For example, load compressor 338 may be referred to as forward of turbine 335 and turbine 335 may be referred to as aft of load compressor 338. As air flows from centrifugal compressor 332 to the more aft components of APU 130, axis of rotation A may also generally define the net direction of the air stream flow. However, the direction of the air stream flow may vary through the individual components. For example, the air flow may be radial in portion of centrifugal compressor 332.

In various embodiments, centrifugal compressor 332, load compressor 338, and turbines 335, 336 may each include a rotor-stator assembly comprising one or more stages or sets of rotating blades ("blades") and one or more stages or sets of stationary vanes ("vanes") axially interspersed with the associated blade stages but non-rotating about axis of rotation A. For example, load compressor 338 may draw air through inlet 331 via one or more inlet guide vanes 339. Load compressor 338 may compress the air (e.g., bleed air) and deliver the compressed air at the supply pressure P1 to starter air valve 140, as discussed further herein. Inlet guide vanes 339 may be adjustable, via one or more actuators, for example. In that respect, adjusting inlet guide vanes 339 may regulate the amount of air drawn through inlet 331 into load compressor 338, and thus the amount of compressed air delivered to starter air valve 140.

In various embodiments, APU 130 may be in electronic communication with an APU controller 395 (e.g., an electronic control unit (ECU)). APU controller 395 may comprise a processor configured to implement various logical operations in response to execution of instructions, for example, instructions stored on a non-transitory, tangible, computer-readable medium. APU controller 395 may be configured to control operation of APU 130. For example, APU controller 395 may be in electronic communication with controller 120, with brief reference to FIG. 1. In that respect, APU controller 395 may be configured to receive electronic data from controller 120, and in response to receiving the electronic data, may be configured to modulate the output of compressed air and the supply pressure P1 based on the electronic data, as discussed further herein. A continuously variable APU 130 supply pressure P1 may improve APU 130 stall margin while still supporting gas turbine engine 110 speed control during startup or other similar motoring events. For example, the electronic data may comprise instructions to adjust inlet guide vanes 339 to increase or decrease the intake of air into load compressor 338, thus increasing or decreasing the output of compressed air from APU 130. The electronic data may comprise instructions to adjust the fuel flow to APU 130, thus increasing or decreasing the output of compressed air from APU 130. The electronic data may also comprise instructions to modulate the speed of shaft 333, thus increasing or decreasing the output of compressed air from APU 130.

In various embodiments, and with reference again to FIG. 1, starter air valve 140 may be in fluid communication with APU 130 and engine starter 150. Starter air valve 140 may be configured to receive a compressed airflow at the supply pressure P1 from APU 130, and deliver a compressed airflow at an output pressure P2 to engine starter 150. A valve control device 145 may be coupled to starter air valve 140. Valve control device 145 may be in electronic communication with controller 120. Valve control device 145 may be configured to receive electronic data from controller 120, and in response to receiving the electronic data, may be configured to adjust or maintain a position of starter air valve 140, as discussed further herein. In that respect, adjusting the position of starter air valve 140 may increase or decrease the output pressure P2 of compressed air to engine starter 150, thus increasing or decreasing the rotational speed of gas turbine engine 110. In various embodiments, valve control device 145 may include, for example, a torque motor servovalve, a solenoid, or other electromagnetic, electromechanical, or electrohydraulic control scheme, such as motorized valve, for example, including an actuator or other servomechanism.

In various embodiments, engine starter 150 may be in fluid communication with starter air valve 140. For example, engine starter 150 may comprise an air turbine starter and may be configured to receive the compressed air at the output pressure P2 from starter air valve 140. Engine starter 150 may include a turbine wheel and gear shaft, wherein in response to receiving the compressed air from starter air valve 140, engine starter 150 may be configured to drive the turbine wheel and gear shaft, and thereby convert the pneumatic energy from the compressed air into mechanical energy. The gear shaft of engine starter 150 may be operatively coupled to gas turbine engine 110 to rotate the gas turbine engine 110 during start-up or during a cold motoring operation prior to start-up. Increasing the airflow to engine starter 150 may increase the rotational speed of the turbine wheel and gear shaft within engine starter 150, and thereby increase the rotational speed of gas turbine engine 110. Decreasing the airflow to engine starter 150 may decrease the rotational speed of the turbine wheel and gear shaft within engine starter 150, and thereby decrease the rotational speed of gas turbine engine 110.

Thus, the airflow output or output pressure P2 may be controlled with either APU 130 or starter air valve, thereby providing dual and redundant control of the airflow output or output pressure P2. The output pressure P2 of the airflow delivered to engine starter 150 may determine a rotational speed of engine starter 150, which controls a rotational speed of gas turbine engine 110. In various embodiments, the output pressure P2 of airflow to engine starter 150 is controlled by system 100 to maintain a rotational engine speed between 1 to 4,000 rotations per minute (rpms) during start-up or cold motoring operations. The control of engine speed by system 100 during startup and motoring may provide a uniformly distributed engine temperature thereby thermally stabilizing the engine.

In various embodiments, controller 120 may be configured to control airflow and air pressure through system 100, thereby controlling the rotational speed of the gas turbine engine 110, as discussed further herein. For example, controller 120 may be configured to receive a motoring command. The motoring command may be input by an operator, system, and/or the like. The motoring command may comprise instructions to begin airflow through system 100. For example, the motoring command may comprise a first APU command and a first starter air valve command. The first APU command may comprise instructions to begin operation of APU 130. For example, with brief reference to FIG. 3, the first APU command may comprise instructions to adjust inlet guide vanes 339 to increase or decrease the intake of air into load compressor 338, thus increasing or decreasing the supply pressure P1 of compressed air supplied from APU 130. The first APU command may also comprise instructions to modulate the speed of shaft 333, thus increasing or decreasing the supply pressure P1 of compressed air supplied from APU 130. In various embodiments, the first APU command may direct APU 30 to begin in a main engine start (MES) mode, a low pressure mode, a high pressure mode, and/or the like.

The first starter air valve command may comprise instructions to actuate starter air valve 140. For example, the first starter air valve command may comprise instructions to adjust the position of starter air valve 140 to increase or decrease the output pressure P2 of compressed air to engine starter 150. In various embodiments, the first starter air valve command may direct starter air valve 140 to actuate a closed position, an open position, or an intermediary position.

In various embodiments, and as a further example, controller 120 may be configured to transmit the first APU command to control an operating point of APU 130. In that respect, controller 120 may be configured to transmit the first APU command to APU controller 395, with brief reference to FIG. 3. In response to receiving the first APU command, APU controller 395 may control APU 130 according to the first APU command. Controller 120 may also be configured to transmit the first starter air valve command to control actuation and position of starter air valve 140. In that respect, controller 120 may be configured to transmit the first starter air valve command to valve control device 145. Valve control device 145 may be configured to control actuation of starter air valve 140 according to the first starter air valve command. In that respect, controller 120 may enable dual methods of modulating airflow and air pressure to engine starter 150 (e.g., via APU 130 and/or starter air valve 140), thereby controlling the rotational speed of gas turbine engine 110 during start-up cycles or cold motoring.

In various embodiments, controller 120 may also be configured to generate and transmit a second APU command and/or a second starter air valve command. The second APU command may be the same as the first APU command or may be different. For example, the second APU command may be based on the engine sensor feedback received from sensor 115, such as engine speed, engine temperature, or air pressure. In that respect, output from APU 130 may be modulated to control the rotational speed of gas turbine engine 110. The second starter air valve command may be the same as the first starter air valve command or may be different. For example, the second starter air valve command may be based on the engine sensor feedback received from sensor 115, such as engine speed, engine temperature, or air pressure. In that respect, output from starter air valve 140 may be modulated to control the rotational speed of gas turbine engine 110.

In various embodiments, controller 120 generates the first starter air valve command or the second starter air valve command to implement pulse width modulation (PWM) control of starter air valve 140. For example, starter air valve 140 is turned on and off by controller 120 in pulses for achieving a PWM control of the airflow to engine starter 150. By regulating a ratio of the "on" time versus the "off' time, the overall airflow rate through starter air valve 140 over time can be adjusted. The "on" pulses are relatively longer to supply more airflow and to increase the output pressure P2 of air to engine starter 150. The "off' pulses are relatively shorter to reduce airflow through starter air valve 140 and to reduce an output pressure P2 of air to engine starter 150. The PWM may also be controlled by controller 120 based on the engine sensor feedback received from sensor 115, such as engine speed, engine temperature, or air pressure.

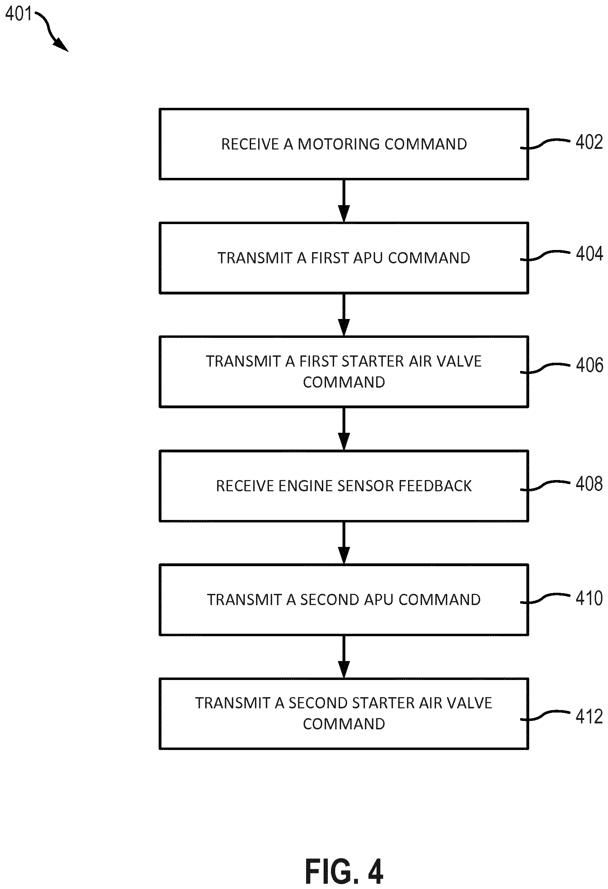

In various embodiments, and with reference to FIG. 4, a method 401 for rotating a gas turbine engine during a motoring cycle is disclosed. With reference to FIGs. 1 and 4, method 401 may comprise receiving a motoring command (Step 402). Controller 120 may receive the motoring command. The motoring command may comprise instructions to begin circulating air, and may comprise a first APU command and a first starter air valve command. The first APU command may comprise instructions to begin operation of APU 130. The first starter air valve command may comprise instructions to actuate starter air valve 140. Method 401 may comprise transmitting the first APU command (Step 404). Controller 120 may transmit the first APU command to APU controller 395. In response to receiving the first APU command, APU controller 395 may control APU 130 according to the first APU command. For example, APU controller 395 may adjust inlet guide vanes 339 in APU 130 to increase or decrease the intake of air into load compressor 338, thus increasing or decreasing the supply pressure P1 of compressed air supplied from APU 130. APU controller 395 may also modulate the speed of shaft 333 in APU 130, thus increasing or decreasing the supply pressure P1 of compressed air supplied from APU 130. In that respect, APU 130 may be modulated to begin operation in a MES mode, a low pressure mode, and/or the like.

Method 401 may comprise transmitting the first starter air valve command (Step 406). Controller 120 may be configured to transmit the first starter air valve command to valve control device 145. In response to receiving the first starter air valve command, valve control device 145 may control actuation of starter air valve 140 according to the first starter air valve command. For example, valve control device 145 may actuate starter air valve 140 to move into a closed position, an open position, or an intermediary position. The intermediary positions may vary the output pressure P2 of the compressed airflow relative to the open position or the closed position.

In various embodiments, method 401 may comprise receiving engine sensor feedback (Step 408). Controller 120 may receive the engine sensor feedback from sensor 115. The engine sensor feedback may comprise measured characteristics of gas turbine engine 110, such as, for example, the rotational speed of gas turbine engine 110, position feedback, temperature feedback, pressure feedback or other data.

In various embodiments, APU 130 and starter air valve 140 may be modulated based on the engine sensor feedback. For example, method 401 may comprise transmitting a second APU command (Step 410). The second APU command may be different from the first APU command. For example, the second APU command may be based on the engine sensor feedback received from sensor 115, such as engine speed, engine temperature, or air pressure. In that respect, output from APU 130 may be modulated to control the rotational speed of gas turbine engine 110. Method 401 may comprise transmitting a second starter air valve command (Step 412). The second starter air valve command may be different from the first starter air valve command. For example, the second starter air valve command may be based on the engine feedback received from sensor 115, such as engine speed, engine temperature, or air pressure. In that respect, output from starter air valve 140 may be modulated to control the rotational speed of gas turbine engine 110.

For example, APU 130 may be modulated to stay in MES mode and starter air valve 140 may be modulated to control rotation in gas turbine engine 110. APU 130 may also be modulated to stay in a low pressure mode and starter air valve 140 may be modulated to control rotation in gas turbine engine 110. APU 130 may also initially begin in MES mode (e.g., in response to the first APU command) and then transition to a low pressure mode in response to the engine sensor feedback (e.g., in response to the second APU command), while and starter air valve 140 may be modulated to control rotation in gas turbine engine 110. APU 130 may also be modulated to control rotation in gas turbine engine 110 while starter air valve 140 is set to an "open" mode. APU 130 and starter air valve 140 may each be modulated to collectively control rotation in gas turbine engine 110.

As used herein, the term "non-transitory" is to be understood to remove only propagating transitory signals per se from the claim scope and does not relinquish rights to all standard computer-readable media that are not only propagating transitory signals per se.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A system (100) for use in a gas turbine engine (110), the system comprising:
a starter air valve (140);an auxiliary power unit (APU)(130);
a sensor (115) configured to measure a rotational speed of the gas turbine engine;
a controller (120) in electronic communication with the starter air valve (140), the auxiliary power unit (APU) (130), and the sensor; and
a tangible, non-transitory memory configured to communicate with the controller, the tangible, non-transitory memory having instructions stored thereon that, in response to execution by the controller, cause the controller to perform operations comprising:
receiving, by the controller, the rotational speed of the gas turbine engine from the sensor;
transmitting, by the controller, an APU command to the APU, wherein the APU command is based on the rotational speed of the gas turbine engine and is configured to control a pressure (P1) of the supply airflow to the starter air valve; and
transmitting, by the controller, a starter air valve command to the starter air valve, wherein the starter air valve command is based on the engine sensor feedback and is configured to control an output pressure (P2) of the airflow to an engine starter (150),
wherein the starter air valve command comprises a pulse width modulation (PWM) control scheme configured to modulate the output pressure of the airflow to the engine starter; and
wherein the PWM control scheme is configured to turn the starter air valve (140) on and off in pulses, wherein the "on" pulses are longer than the "off' pulses.

2. The system of claim 1, wherein the operations further comprise the step of controlling, by the controller (120), a speed of rotation in the gas turbine engine (110) by modulating the output pressure (P2) of the airflow to the engine starter (150).

3. The system of claim 1 or 2, wherein the APU command is configured to modulate the APU (130) into a main engine start (MES) mode, a low pressure mode, or a high pressure mode, and/or
wherein, optionally, in response to receiving the starter air valve command the starter air valve (140) is configured to actuate into an open position or an intermediary position.

4. The system of any preceding claim, wherein in response to transmitting the starter air valve command and the APU command, the APU (130) and the starter air valve (140) are configured to one of:
modulate the APU to a MES mode and modulate the starter air valve to an intermediary position; and
modulate the APU to a low pressure mode and modulate the starter air valve to an open position.

5. A method, comprising:
receiving, by a controller (120), an engine sensor feedback from a sensor (115) in electronic communication with a gas turbine engine (110), wherein the engine sensor feedback comprises a rotational speed of the gas turbine engine;
transmitting, by the controller, an APU command to an APU (130) in electronic communication with the controller, wherein the APU command is based on the engine sensor feedback, and wherein the APU is configured to supply a compressed airflow (P1) to a starter air valve (140) in response to receiving the APU command; and
transmitting, by the controller, a starter air valve command to the starter air valve in electronic communication with the controller, wherein the starter air valve command is based on the engine sensor feedback, and wherein the starter air valve is configured to actuate to control an air outlet pressure (P2) of the compressed airflow to an engine starter (150) in response to receiving the starter air valve command,
the method further comprising modulating, by the controller, the compressed airflow from the starter air valve to the engine starter, wherein the modulating is based on a pulse width modulation (PWM) control scheme,
wherein the PWM control scheme is configured to turn the starter air valve (140) on and off in pulses, wherein the "on" pulses are longer than the "off' pulses.

6. The method of claim 5, further comprising modulating, by the engine starter (150), a rotation speed of the gas turbine engine (110) in response to receiving the compressed airflow (P2) from the starter air valve (140).

7. The method of claim 5 or 6, further comprising receiving, by the controller (120), a motoring command, wherein the motoring command is configured to initiate an airflow from the APU (130) to the starter air valve (140).

8. The method of claim 5, 6 or 7, wherein the engine sensor feedback additionally comprises at least one of a speed signal, a position feedback, a temperature feedback, or a pressure feedback, and /or wherein, optionally, the APU command is configured to modulate the APU (130) into a main engine start (MES) mode, a low pressure mode, or a high pressure mode.

9. The method of any of claims 5 to 8, wherein in response to receiving the starter air valve command the starter air valve (140) is configured to actuate into an open position or an intermediary position.

10. A controller for a gas turbine engine, said controller comprising a processor and a tangible, non-transitory computer-readable storage medium having instructions stored thereon that, in response to execution by the processor, cause the controller to perform the method of claim 5.

11. The controller of claim 10, further comprising the operation of modulating, by the engine starter (150), a rotation speed of the gas turbine engine (110) in response to receiving the compressed airflow (P2) from the starter air valve (140).

12. The controller of claim 10 or 11, further comprising the operation of receiving, by the processor, a motoring command, wherein the motoring command is configured to initiate an airflow from the APU (130) to the starter air valve (140).

13. The controller of claim 10, 11 or 12, wherein the engine sensor feedback additionally comprises at least one of a speed signal, a position feedback, a temperature feedback, or a pressure feedback.

14. The controller of any of claims 10 to 13, wherein the APU command is configured to modulate the APU (130) into a main engine start (MES) mode, a low pressure mode, or a high pressure mode, and/or wherein in response to receiving the starter air valve command the starter air valve (140) is configured to actuate into an open position or an intermediary position.

## Patentansprüche

1. System (100) zur Verwendung in einem Gasturbinenmotor (110), wobei das System Folgendes umfasst:
ein Anlasserluftventil (140); ein Hilfstriebwerk (auxiliary power unit - APU) (130);
einen Sensor (115), der dazu konfiguriert ist, eine Drehzahl des Gasturbinenmotors zu messen;
eine Steuerung (120), die in elektronischer Kommunikation mit dem Anlasserluftventil (140), dem Hilfstriebwerk (APU) (130) und dem Sensor steht; und
einen physischen, nicht transitorischen Speicher, der dazu konfiguriert ist, mit der Steuerung zu kommunizieren, wobei der physische, nicht transitorische Speicher darauf gespeicherte Anweisungen aufweist, die als Reaktion auf eine Ausführung durch die Steuerung die Steuerung dazu veranlassen, Vorgänge durchzuführen, umfassend:
Empfangen der Drehzahl des Gasturbinenmotors von dem Sensor durch die Steuerung;
Übertragen eines APU-Befehls an das APU durch die Steuerung, wobei der APU-Befehl auf der Drehzahl des Gasturbinenmotors basiert und dazu konfiguriert ist, einen Druck (P1) des Zuluftstroms an das Anlasserluftventil zu steuern; und
Übertragen eines Anlasserluftventilbefehls an das Anlasserluftventil durch die Steuerung, wobei der Anlasserluftventilbefehl auf der Motorsensorrückkopplung basiert und dazu konfiguriert ist, einen Ausgangsdruck (P2) des Luftstroms zu einem Motoranlasser (150) zu steuern,
wobei der Anlasserluftventilbefehl ein Steuerschema für eine Pulsweitenmodulation (pulse width modulation - PWM) umfasst, das dazu konfiguriert ist, den Ausgangsdruck des Luftstroms zu dem Motoranlasser zu modulieren; und
wobei das PWM-Steuerschema dazu konfiguriert ist, das Anlasserluftventil (140) in Pulsen ein- und auszuschalten, wobei die "Einschaltpulse" länger sind als die "Ausschaltpulse".

2. System nach Anspruch 1, wobei die Vorgänge ferner den Schritt des Steuerns einer Drehzahl in dem Gasturbinenmotor (110) durch die Steuerung (120) durch Modulieren des Ausgangsdrucks (P2) des Luftstroms zu dem Motoranlasser (150) umfassen.

3. System nach Anspruch 1 oder 2, wobei der APU-Befehl dazu konfiguriert ist, das APU (130) in einen Hauptmotorstartmodus (main engine start - MES-Modus), einen Niederdruckmodus oder einen Hochdruckmodus zu modulieren, und/oder
wobei das Anlasserluftventil (140) gegebenenfalls dazu konfiguriert ist, als Reaktion auf Empfangen des Anlasserluftventilbefehls in eine offene Position oder eine Zwischenposition betätigt zu werden.

4. System nach einem der vorangehenden Ansprüche, wobei das APU (130) und das Anlasserluftventil (140) als Reaktion auf Übertragen des Anlasserluftventilbefehls und des APU-Befehls zu einem der Folgenden konfiguriert sind:
Modulieren des APU in einen MES-Modus und Modulieren des Anlasserluftventils in eine Zwischenposition; und
Modulieren des APU in einen Niederdruckmodus und Modulieren des Anlasserluftventils in eine offene Position.

5. Verfahren, umfassend:
Empfangen einer Motorsensorrückkopplung von einem Sensor (115), der in elektronischer Kommunikation mit einem Gasturbinenmotor (110) steht, durch eine Steuerung (120), wobei die Motorsensorrückkopplung eine Drehzahl des Gasturbinenmotors umfasst;
Übertragen eines APU-Befehls an ein APU (130), das in elektronischer Kommunikation mit der Steuerung steht, durch die Steuerung, wobei der APU-Befehl auf der Motorsensorrückkopplung basiert und wobei das APU dazu konfiguriert ist, als Reaktion auf Empfangen des APU-Befehls einen komprimierten Luftstrom (P1) an ein Anlasserluftventil (140) zuzuführen; und
Übertragen eines Anlasserluftventilbefehls an das Anlasserluftventil, das in elektronischer Kommunikation mit der Steuerung steht, durch die Steuerung, wobei der Anlasserluftventilbefehl auf der Motorsensorrückkopplung basiert und wobei das Anlasserluftventil dazu konfiguriert ist, betätigt zu werden, um als Reaktion auf Empfangen des Anlasserluftventilbefehls einen Luftauslassdruck (P2) des komprimierten Luftstroms an einen Motoranlasser (150) zu steuern,
wobei das Verfahren ferner Modulieren des verdichteten Luftstroms von dem Anlasserluftventil zu dem Motoranlasser durch die Steuerung umfasst, wobei das Modulieren auf einem Steuerschema für eine Pulsweitenmodulation (PWM) basiert,
wobei das PWM-Steuerschema dazu konfiguriert ist, das Anlasserluftventil (140) in Pulsen ein- und auszuschalten, wobei die "Einschaltpulse" länger sind als die "Ausschaltpulse".

6. Verfahren nach Anspruch 5, ferner umfassend Modulieren einer Drehzahl des Gasturbinenmotors (110) durch den Motoranlasser (150) als Reaktion auf Empfangen des verdichteten Luftstroms (P2) von dem Anlasserluftventil (140).

7. Verfahren nach Anspruch 5 oder 6, ferner umfassend Empfangen eines Motorbetriebsbefehls durch die Steuerung (120), wobei der Motorbetriebsbefehl dazu konfiguriert ist, einen Luftstrom von dem APU (130) zu dem Anlasserluftventil (140) einzuleiten.

8. Verfahren nach Anspruch 5, 6 oder 7, wobei die Motorsensorrückkopplung zusätzlich mindestens eines von einem Geschwindigkeitssignal, einer Positionsrückkopplung, einer Temperaturrückkopplung oder einer Druckrückkopplung umfasst und/oder
wobei der APU-Befehl gegebenenfalls dazu konfiguriert ist, das APU (130) in einen Hauptmotorstartmodus (MES-Modus), einen Niederdruckmodus oder einen Hochdruckmodus zu modulieren.

9. Verfahren nach einem der Ansprüche 5 bis 8, wobei das Anlasserluftventil (140) dazu konfiguriert ist, als Reaktion auf Empfangen des Anlasserluftventilbefehls in eine offene Position oder eine Zwischenposition betätigt zu werden.

10. Steuerung für einen Gasturbinenmotor, wobei die Steuerung einen Prozessor und ein physisches, nicht transitorisches computerlesbares Speichermedium umfasst, das darauf gespeicherte Anweisungen aufweist, die als Reaktion auf eine Ausführung durch den Prozessor die Steuerung dazu veranlassen, das Verfahren nach Anspruch 5 durchzuführen.

11. Steuerung nach Anspruch 10, ferner umfassend den Vorgang des Modulierens einer Drehzahl des Gasturbinenmotors (110) durch den Motoranlasser (150) als Reaktion auf Empfangen der verdichteten Luftstroms (P2) von dem Anlasserluftventil (140) .

12. Steuerung nach Anspruch 10 oder 11, ferner umfassend den Vorgang des Empfangens eines Motorbetriebsbefehls durch den Prozessor, wobei der Motorbetriebsbefehl dazu konfiguriert ist, einen Luftstrom von dem APU (130) zu dem Anlasserluftventil (140) einzuleiten.

13. Steuerung nach Anspruch 10, 11 oder 12, wobei die Motorsensorrückkopplung zusätzlich mindestens eines von einem Geschwindigkeitssignal, einer Positionsrückkopplung, einer Temperaturrückkopplung oder einer Druckrückkopplung umfasst.

14. Steuerung nach einem der Ansprüche 10 bis 13, wobei der APU-Befehl dazu konfiguriert ist, das APU (130) in einen Hauptmotorstartmodus (MES-Modus), einen Niederdruckmodus oder einen Hochdruckmodus zu modulieren, und/oder
wobei das Anlasserluftventil (140) dazu konfiguriert ist, als Reaktion auf Empfangen des Anlasserluftventilbefehls in eine offene Position oder eine Zwischenposition betätigt zu werden.

## Revendications

1. Système (100) destiné à être utilisé dans un moteur à turbine à gaz (110), le système comprenant :
un clapet de démarrage (140) ; un groupe auxiliaire de puissance (GAP) (130) ;
un capteur (115) conçu pour mesurer une vitesse de rotation du moteur à turbine à gaz ;
un dispositif de commande (120) en communication électronique avec le clapet de démarrage (140), le groupe auxiliaire de puissance (GAP) (130) et le capteur ; et
une mémoire non transitoire tangible conçue pour communiquer avec le dispositif de commande, la mémoire non transitoire tangible stockant des instructions qui, en réponse à leur exécution par le dispositif de commande, amènent le dispositif de commande à effectuer des opérations comprenant :
la réception, par le dispositif de commande, de la vitesse de rotation du moteur à turbine à gaz provenant du capteur ;
la transmission, par le dispositif de commande, d'une commande de GAP vers le GAP, dans lequel la commande de GAP est basée sur la vitesse de rotation du moteur à turbine à gaz et est conçue pour commander une pression (P1) du flux d'air d'alimentation vers le clapet de démarrage ; et
la transmission, par le dispositif de commande, d'une commande de clapet de démarrage vers le clapet de démarrage, dans lequel la commande de clapet de démarrage est basée sur la rétroaction de capteur de moteur et est conçue pour commander une pression de sortie (P2) du flux d'air vers le démarreur de moteur (150),
dans lequel la commande de clapet de démarrage comprend un schéma de commande de modulation de largeur d'impulsion (PWM) conçu pour moduler la pression de sortie du flux d'air vers le démarreur de moteur ; et
dans lequel le schéma de commande de PWM est conçu pour activer et désactiver le clapet de démarrage (140) par impulsions, dans lequel les impulsions « marche » sont plus longues que les impulsions « arrêt ».

2. Système selon la revendication 1, dans lequel les opérations comprennent en outre l'étape de commande, par le dispositif de commande (120), d'une vitesse de rotation dans le moteur à turbine à gaz (110) en modulant la pression de sortie (P2) du flux d'air vers le démarreur de moteur (150).

3. Système selon la revendication 1 ou 2, dans lequel la commande de GAP est conçue pour moduler le GAP (130) dans un mode de démarrage du moteur principal (MES), dans un mode basse pression ou dans un mode haute pression, et/ou
dans lequel, éventuellement, en réponse à la réception de la commande de clapet de démarrage, le clapet de démarrage (140) est conçu pour passer dans une position ouverte ou dans une position intermédiaire.

4. Système selon une quelconque revendication précédente, dans lequel en réponse à la transmission de la commande de clapet de démarrage et de la commande de GAP, le GAP (130) et le clapet de démarrage (140) sont conçus pour l'une des actions suivantes :
moduler le GAP dans un mode MES et moduler le clapet de démarrage dans une position intermédiaire ; et
moduler le GAP dans un mode basse pression et moduler le clapet de démarrage dans une position ouverte.

5. Procédé, comprenant :
la réception, par un dispositif de commande (120), d'une rétroaction de capteur de moteur provenant d'un capteur (115) en communication électronique avec un moteur à turbine à gaz (110), dans lequel la rétroaction de capteur de moteur comprend une vitesse de rotation du moteur à turbine à gaz ;
la transmission, par le dispositif de commande, d'une commande de GAP vers un GAP (130) en communication électronique avec le dispositif de commande, dans lequel la commande de GAP est basée sur la rétroaction de capteur de moteur, et dans lequel le GAP est conçu pour fournir un flux d'air comprimé (P1) à un clapet de démarrage (140) en réponse à la réception de la commande de GAP ; et
la transmission, par le dispositif de commande, d'une commande de clapet de démarrage vers le clapet de démarrage en communication électronique avec le dispositif de commande, dans lequel la commande de clapet de démarrage est basée sur la rétroaction de capteur de moteur, et dans lequel le clapet de démarrage est conçu pour s'actionner afin de commander une pression de sortie d'air (P2) du flux d'air comprimé vers un démarreur de moteur (150) en réponse à la réception de la commande de clapet de démarrage,
le procédé comprenant en outre la modulation, par le dispositif de commande, du flux d'air comprimé du clapet de démarrage vers le démarreur de moteur, dans lequel la modulation est basée sur un schéma de commande de modulation de largeur d'impulsion (PWM),
dans lequel le schéma de commande de PWM est conçu pour activer et désactiver le clapet de démarrage (140) par impulsions, dans lequel les impulsions « marche » sont plus longues que les impulsions « arrêt ».

6. Procédé selon la revendication 5, comprenant en outre la modulation, par le démarreur de moteur (150), d'une vitesse de rotation du moteur à turbine à gaz (110) en réponse à la réception du flux d'air comprimé (P2) provenant du clapet de démarrage (140).

7. Procédé selon la revendication 5 ou 6, comprenant en outre la réception, par le dispositif de commande (120), d'une commande de motorisation, dans lequel la commande de motorisation est conçue pour initier un flux d'air du GAP (130) vers le clapet de démarrage (140).

8. Procédé selon la revendication 5, 6 ou 7, dans lequel la rétroaction de capteur de moteur comprend en outre au moins l'un parmi un signal de vitesse, une rétroaction de position, une rétroaction de température ou une rétroaction de pression, et/ou
dans lequel, éventuellement, la commande de GAP est conçue pour moduler le GAP (130) dans un mode de démarrage du moteur principal (MES), dans un mode basse pression ou dans un mode haute pression.

9. Procédé selon l'une quelconque des revendications 5 à 8, dans lequel en réponse à la réception de la commande de clapet de démarrage, le clapet de démarrage (140) est conçu pour passer dans une position ouverte ou dans une position intermédiaire.

10. Dispositif de commande pour un moteur à turbine à gaz, ledit dispositif de commande comprenant un processeur et un support de stockage non transitoire lisible par ordinateur tangible stockant des instructions qui, en réponse à l'exécution par le processeur, amènent le dispositif de commande à mettre en œuvre le procédé selon la revendication 5.

11. Dispositif de commande selon la revendication 10, comprenant en outre l'opération de modulation, par le démarreur de moteur (150), d'une vitesse de rotation du moteur à turbine à gaz (110) en réponse à la réception du flux d'air comprimé (P2) provenant du clapet de démarrage (140).

12. Dispositif de commande selon la revendication 10 ou 11, comprenant en outre l'opération de réception, par le processeur, d'une commande de motorisation, dans lequel la commande de motorisation est conçue pour initier un flux d'air du GAP (130) vers le clapet de démarrage (140).

13. Dispositif de commande selon la revendication 10, 11 ou 12, dans lequel la rétroaction de capteur de moteur comprend en outre au moins l'un parmi un signal de vitesse, une rétroaction de position, une rétroaction de température ou une rétroaction de pression.

14. Dispositif de commande selon l'une quelconque des revendications 10 à 13, dans lequel la commande de GAP est conçue pour moduler le GAP (130) dans un mode de démarrage du moteur principal (MES), dans un mode basse pression ou dans un mode haute pression, et/ou
dans lequel en réponse à la réception de la commande de clapet de démarrage, le clapet de démarrage (140) est conçu pour passer dans une position ouverte ou dans une position intermédiaire.
